# EUROPEAN PATENT SPECIFICATION

(11) **EP 2 414 269 B1**
(45) Date of publication and mention of the grant of the patent: **30.10.2013**
(21) Application number: 10744612.2
(22) Date of filing: 29.03.2010
(51) Int. Cl.: B66B 7/00, H02J 17/00

(54) **ELEVATOR SYSTEM**
AUFZUGSYSTEM
SYSTÈME D'ASCENSEUR

(30) Priority: 31.03.2009 FI 20090122
(43) Date of publication of application: 08.02.2012
(73) Proprietor: Kone Corporation, 00330 Helsinki (FI)
(72) Inventor: KALLIONIEMI, Antti, FI-05400 Tuusula (FI)
(74) Representative: Graf Glück Kritzenberger
(86) International application number: PCT/FI2010/050245
(87) International publication number: WO 2010/112675

(56) References cited:
- WO-A1-03/020625
- DE-A1- 10 041 160
- KR-B1- 100 874 438
- US-B1- 6 412 604

## Description

The invention relates to wireless solutions in an elevator system.

The electricity supply for the different control apparatuses and measuring apparatuses of an elevator system conventionally occur with supply cables. For this reason supply cables are laid at least to the elevator hoistway, to the elevator car and to the different floors of the building in connection with the landing doors of the elevator. The cabling causes many problems; these are, for example, the complexity of the installation work, the price of materials and also possible earth faults of the conductors. For this reason a need has arisen to seek alternative solutions, with which the cabling could be reduced or it could be completely eliminated.

Publication US 6467585 B1 presents a solution wherein the control system of an elevator communicates wirelessly e.g. with the measuring electronics of the sensors that measure the position of the door of the elevator. For this reason, the measuring electronics of the sensors comprises a wireless transmitter / receiver. The electricity supply to the measuring electronics occurs in this case e.g. with accumulators or with batteries. In this type of solution the accumulators / batteries, which are disposed on different sides of the elevator system and which must be replaced and serviced at set intervals, form a problem.

The DE 100 41 160 A1 discloses a container station having a plurality of sensors and actuators which communicate wireless with a base station connected to a control. The container further comprises a primary winding for providing energy supply for the sensors and actuators. On this behalf the sensors and actuators comprise a secondary winding for receiving the energy transmitted via the primary winding.

The US 6,412,604 discloses the wireless charging of a vehicle of a transportation system whereby a primary winding is connection via a coupling transformer to a public power supply and the secondary winding is located on the vehicle. The energy transfer is controlled via a controller.

The WO 03/020625 discloses an elevator system having hall fixtures such as lanterns, hall call bottoms switches and lights, gongs and floor position indicators which are connected to the controller via wireless transceivers. A low power wireless systems connects all fixtures on the hallway with a higher power wireless system connecting each hall way with an appropriate controller.

The aim of the invention is to solve the aforementioned drawbacks as well as the drawbacks disclosed in the description of the invention below. A further aim of the invention is to present an elevator system that is simpler and more operationally reliable than prior art.

The elevator system according to the invention is characterized by what is disclosed in the characterization part of claim 1. Other features of the invention are characterized by what is disclosed in the other claims.

Some inventive embodiments are also discussed in the descriptive section of the present application. The inventive content may also consist of several separate inventions, especially if the invention is considered in the light of expressions or implicit sub-tasks or from the point of view of advantages or categories of advantages achieved. In this case, some of the attributes contained in the claims below may be superfluous from the point of view of separate inventive concepts.

The elevator system according to the invention comprises at least one power source that supplies power wirelessly. At least one measuring apparatus that receives power wirelessly is fitted in the area of the range of the power supply of said power source. The aforementioned measuring apparatus comprises a transmitter for forming a measuring signal that propagates wirelessly. The aforementioned power source preferably comprises an antenna, which is fitted to form an electromagnetic signal of a set frequency that propagates wirelessly. Also, the aforementioned measuring apparatus preferably comprises an antenna, which is arranged to receive electromagnetic radiation at its resonance frequency, i.e. at its oscillation frequency. The measuring apparatus receives its operating electricity preferably from the electromagnetic radiation received by the antenna. The antenna of the measuring apparatus preferably functions also as a transmitter, by means of which a measuring signal is formed.

The elevator system comprises at least one reader, and a first wireless data transfer connection is made between the reader and the measuring apparatus. The reader preferably comprises an antenna for receiving the measuring signal formed by the measuring apparatus. In a preferred embodiment of the invention the aforementioned antenna of the power source also functions as the antenna of the reader such that the antenna of the power source is arranged to receive the measuring signal formed by the measuring apparatus.

Further according to the invention the reader is fitted to generate a control signal of the power supply. The power source comprises a control circuit of the power supply, which control circuit of the power supply comprises an input for the control signal of the power supply, and the control circuit of the power supply is fitted to start and/or to disconnect the operation of the power source on the basis of the control signal of the power supply generated by the reader.

The power source can also comprise an accumulator. A charging circuit can be fitted in connection with the accumulator, which charging circuit comprises an interface to an inductively connected charging apparatus. The aforementioned charging apparatus can be fitted e.g. in connection with the elevator car.

In a preferred embodiment of the invention the elevator system comprises a supervision unit and a second wireless data transfer connection is made between the supervision unit and the reader.

In a preferred embodiment of the invention the reader and the power source are integrated into the same power supply unit.

In a preferred embodiment of the invention at least one power source is disposed in the end zone of the elevator hoistway, and the range of the power supply of the power source determines the safety space of the end zone of the elevator hoistway.

At least one power source is preferably fitted in connection with the elevator car, and the range of the power supply of the power source fitted in connection with the elevator car determines the area of permitted movement of the elevator car.

In one embodiment of the invention the area of the range of the power supply of the power source fitted in connection with the elevator car as well as the area of the range of the power supply of the power source disposed elsewhere in the elevator hoistway determine when they both merge the area of permitted movement of the elevator car.

In one embodiment of the invention the measuring apparatus comprises an oscillator, preferably an antenna, the oscillation frequency of which is made to be a response to the magnitude being measured. The wirelessly propagating measuring signal formed by which measuring apparatus in this case contains a component, the frequency of which is the same as the oscillation frequency, or is proportional to the oscillation frequency, and the reader comprises a frequency analyzer, which comprises an input for the aforementioned measuring signal, and the frequency analyzer is fitted to determine the magnitude of the components of the measuring signal fitting inside a frequency band of this type, which frequency band is limited to the environment of the target value of the frequency that is a response to the magnitude being measured that describes normal operation of the elevator.

In a preferred embodiment of the invention the control circuit of the power supply is fitted to select the frequency of the power supply signal used at any given time on the basis of the control signal of the power supply, and the frequency of the power supply signal used is selected to be essentially the same as, or spaced at equal intervals with, the frequency of the component of its measuring signal, which in this case is determined with the frequency analyzer. The supervision unit is preferably fitted to determine an operationally special situation of the elevator if the determined components of the measuring signal, and/or the combined effect of them, remain below the required minimum in their magnitude.

In one embodiment of the invention the aforementioned oscillator comprises two parts that move in relation to each other, and the oscillation frequency of the oscillator is made to be variable as a response to the change in mutual position between the aforementioned parts of the oscillator that move in relation to each other.

Since the measuring apparatus according to the invention can receive the operating power it needs from the power source wirelessly, the measuring apparatus can be implemented without a battery, accumulator or other separate energy storage. Furthermore, according to the invention it is also possible to dispose a number of measuring apparatuses in the area of the range of the power supply, in which case the power supply to the measuring apparatuses can occur centrally by means of the power source. Consequently, the cabling of the elevator system can be reduced. At the same time the serviceability of the elevator system nevertheless remains good, particularly owing to the low number of accumulators and batteries.

One advantage of the invention is that better operational reliability of the measuring apparatus is achieved. This results from the magnitude being measured always varying to some extent e.g. owing to a measuring error, movement of sensors, a change in environmental variables such as temperature or humidity, etc. When the components of the measuring signal that are of different frequency are determined with a frequency analyzer from the range of a certain limited frequency band, the effect of the factors causing different measuring errors in the measuring signal can to a large extent be eliminated, and the measuring signal can be detected reliably. This is advantageous particularly when measuring the magnitudes that determine the safety of an elevator system, such as e.g. the position or locking of the door of the landing doors and/or of the elevator car, the position of final limit switches, the operation of the overspeed governor, or when measuring the operation of the braking apparatus of the elevator machine or the operation of the safety gear of the elevator car. Thus the measuring apparatuses disposed in the area of the range of the power supply of the power source supplying power wirelessly can also form a safe area of the elevator hoistway, the magnitude of which is therefore determined on the basis of the range of the aforementioned power supply. The power source disposed in the end zone of the elevator hoistway as well as the measuring apparatuses disposed in the area of the range of the power supply, such as the final limit switches, the switches that determine the temporary safety space, such as the servicing space, and/or the sensors that measure the state of the mechanical safety devices of the end zone, can thus determine the magnitude of the safety space of the end zone of the elevator hoistway. The power source fitted in connection with the elevator car, as well as the measuring apparatuses disposed in the area of the range of the power supply of it, on the other hand determine the area of permitted movement of the elevator car. In this case the area of permitted movement can also change as the elevator car moves, because the area of the range of the power supply of the power source fitted in connection with the elevator car moves according to the movement of the elevator car. The supervision unit of the elevator system sees to it that the deceleration of the elevator car produced by a mechanical stopping apparatus, such as a machinery brake and/or the safety gear, is sufficient at any given moment in time to stop the elevator car inside the area of permitted movement surrounding the elevator car at the moment the stopping begins.

The wireless transfer connection of power and/or information according to the invention can be implemented e.g. with electromagnetic radiation, such as with radio-frequency RF waves or with laser radiation, or for instance with ultrasound.

### Presentation of drawings

In the following, the invention will be described in more detail by the aid of a few examples of its embodiments with reference to the attached drawings, wherein
- Fig. 1: presents an elevator system according to the invention
- Fig. 2: presents an arrangement according to the invention between the power source, the measuring apparatus and the reader.
- Fig. 3a, 3b: illustrate the operation of a frequency analyzer according to the invention

### Embodiments

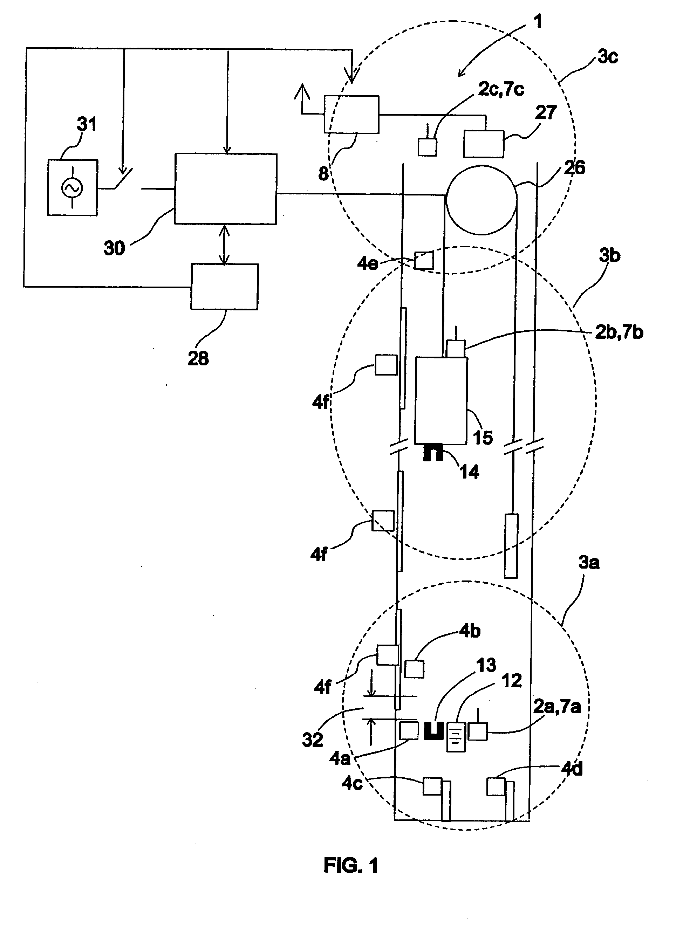

In the elevator system 1 of Fig. 1 the elevator car 15 and also the counterweight are supported with elevator ropes that pass via the traction sheave of the elevator machine 26. The elevator control apparatus 28 endeavors to adjust the movement of the elevator car according to the reference for movement, by controlling the electricity supply between the electricity network 31 and the elevator motor 26 by means of a frequency converter 30.

A power source 2a that supplies power wirelessly is disposed in the bottom end zone in the elevator hoistway. In the area 3a of the range of the power supply of the power source measuring apparatuses 4a-4f that receive power wirelessly are fitted. The measuring apparatuses comprise an antenna, via which the measuring apparatus receives the operating electricity that it needs. By means of the antenna, the measuring apparatus also forms and transmits a wirelessly propagating measuring signal.

At least one of the measuring apparatuses 4a is fitted at a certain first distance from the bottom of the pit of the elevator hoistway, in which case the measuring apparatus 4a functions as a limit switch for normal drive of the elevator, determining the area of permitted movement of normal drive in the bottom end. At least one of the measuring apparatuses 4b is fitted at a second certain distance, that is longer than the first distance, from the bottom of the pit of the elevator hoistway, in which case the measuring apparatus 4b functions as a limit switch for service drive of the elevator, determining an adequate service space for a serviceman to work from the bottom of the pit. The limit switch 4b for service drive is activated only in defined operationally special situations of the elevator, such as when opening the lowermost landing door 32 with an emergency key or when otherwise deducing that a serviceman has moved into the elevator hoistway. The measuring apparatuses 4c, 4d are also fitted in connection with the safety buffers under the car and the counterweight, in which case the measuring apparatuses determine the position of the buffers, and by means of them e.g. the compression of the buffers can be detected; in addition, if manually-activated safety devices, such as turnable buffers and guide rail detents, are fitted to the bottom of the hoistway, the operating status of these also can be monitored with corresponding measuring apparatuses.

A power source 2c that supplies power wirelessly is also disposed in the top end zone of the elevator hoistway. In the area 3c of the range of the aforementioned power source a measuring apparatus 4e that receives power wirelessly is fitted. The measuring apparatus 4e is fitted at a set distance from the top end of the elevator hoistway, in which case the measuring apparatus determines the area of permitted movement in the top end zone of the elevator hoistway during normal drive of the elevator car.

A third power source 2b that supplies power wirelessly is fitted in connection with the elevator car. Measuring apparatuses 4f that receive power wirelessly are fitted in the elevator hoistway in connection with the floor levels, which measuring apparatuses measure the position and/or the locking of a landing door.

The elevator system also comprises three readers 7a, 7b, 7c, which are disposed in the elevator hoistway such that one reader and a power source 2a, 2b, 2c that supplies power wirelessly are always integrated with each other in the same power supply unit. The aforementioned power supply unit comprises an antenna, via which the power supply to the measuring apparatuses 4a-4f disposed in the area of the range of the power supply of the power source occurs. Via the antenna, the reader also receives the wirelessly propagating measuring signal formed by the measuring apparatus disposed in the area of the range of the power supply.

The power source disposed in the bottom end zone of the hoistway also comprises an accumulator 12, which functions as an energy storage of the power source 2a. A charging circuit 13 is fitted in connection with the accumulator, which charging circuit comprises an interface to an inductively connected charging apparatus 14, in which case energy is charged into the accumulator from the charging apparatus 14 via a magnetic field. The aforementioned charging apparatus 14 is fitted in connection with the elevator car 15, and the accumulator is charged always when the elevator car stops at the lowermost floor, in which case the charging apparatus 14 is disposed in the immediate proximity of the charging circuit 13.

The elevator system further comprises a supervision unit 8, which communicates with the readers 7a, 7b, 7c via a separate wireless data transfer channel (not in figure) between them. Communication between the supervision unit 8 and the readers 7a, 7b, 7c occurs by polling, so that the supervision unit sends an enquiry to the readers at set time intervals, and the readers respond to the enquiry each in turn. The data transfer channel between the supervision unit 8 and the readers 7a, 7b, 7c can be e.g. a radio-frequency that is, in itself, known in the art. The supervision unit 8 receives via the readers 7a, 7b, 7c the measuring data of the measuring apparatuses 4a-4f, and deduces by means of the measuring data the operating mode of the elevator system at a certain moment of time. When it detects a dangerous situation of the elevator system, the supervision unit 8 can if necessary disconnect the current supply to the control winding of the machinery brake 27, in which case the machinery brake engages mechanically to prevent movement of the traction sheave. In addition, the supervision unit can at the same time disconnect the electricity supply between the electricity network and the motor by opening a controllable switch in the power supply circuit of the motor.

The supervision unit 8 receives information about the locking of the landing door of the lowermost floor. If the supervision unit detects that the lock of the lowermost landing door has been opened with an emergency key, the supervision unit determines an operationally special situation of the elevator system, in which normal drive of the elevator is prevented and movement of the elevator car to closer to the end of the elevator car than the limit switch for service drive is also prevented. In this case if the elevator car arrives at the limit switch for service drive, the ramp fixed on the elevator car changes the position of the limit switch for service drive; the supervision unit 8 determines via the reader 7a the change in position of the ramp and activates the safety gear of the elevator car, in which case the movement of the elevator car towards the bottom end of the elevator hoistway stops.

The supervision unit 8 also determines the locking of the landing door(s) disposed predominantly above the elevator car by means of the measuring apparatus 4f disposed in the area of the range of the power supply of the power source 2b fitted in connection with the landing door. If the supervision unit detects that the lock of the aforementioned landing door has been opened with an emergency key, the supervision unit deduces that a serviceman has moved onto the roof of the elevator car for servicing procedures. In this case the supervision unit 8 determines an operationally special situation of the elevator system, in which at least normal drive of the elevator is prevented.

The cancellation of the special situations described above for permitting normal operation of the elevator requires the operation of a separate key-operated cancellation device disposed outside the elevator hoistway.

The supervision unit 8 also receives information from the measuring apparatus disposed in the area of the range of the power supply of the power source 2b that is fitted in connection with the elevator car and that supplies power wirelessly. In this case those of the measuring apparatuses 4f fitted in connection with landing doors, which at a certain moment in time are disposed in the area 3b of the range of the power supply of the power source 2b fitted in connection with the elevator car, determine the area of permitted movement of the elevator car. Furthermore, if the movement of the elevator car continues to near the end zone of the elevator hoistway, the area 3b of the range of the power supply of the power source 2b fitted in connection with the elevator car as well as the area 3a, 3c of the range of the power supply of the power source 2a, 2c fitted in the end zone of the elevator hoistway merge, and when they both merge they determine the area of permitted movement of the elevator car. In this case the area of permitted movement is determined by the measuring apparatuses disposed in the area of the range of the power supply of the power supply of both the power sources 2a, 2b, 2c, and thus the area of permitted movement of the elevator car increases to some extent.

The supervision unit 8 measures the position of the elevator car in the elevator hoistway, e.g. by means of the motion sensor of the elevator machine, the motion sensor of the elevator car or both, and thus determines the position of the elevator car in the area of permitted movement of the elevator car at each moment in time. Likewise the supervision unit 8 monitors that it is always possible to stop the elevator car inside the determined area of permitted movement of the elevator car at any time. For this reason the supervision unit calculates the shortest possible critical stopping distance of the elevator car using the instantaneous speed data of the elevator car as well as the critical deceleration of the elevator car. The critical deceleration can be e.g. a standard value calculated on the basis of the deceleration produced by the machinery brake or the safety gear. The supervision unit compares the calculated critical stopping distance of the elevator car to the limit 3b of the area of permitted movement situated ahead in the direction of the stopping motion, and if the calculated critical stopping distance is at some moment greater than the distance of the elevator car from the limit of the area 3b of permitted movement situated ahead, the supervision unit 8 performs an emergency stop by controlling the machinery brake and, if necessary, also the safety gear; when using the safety gear, normally a slightly greater deceleration is achieved than with the machinery brake.

The electricity supply to the elevator car can be arranged e.g. with car cables. A dynamometer, for instance, can also be fitted in connection with some part that moves in relation to the car, e.g. in connection with a diverting pulley or guide rail, in which case the electrical energy needed in the car can be supplied as mechanical energy via the elevator ropes.

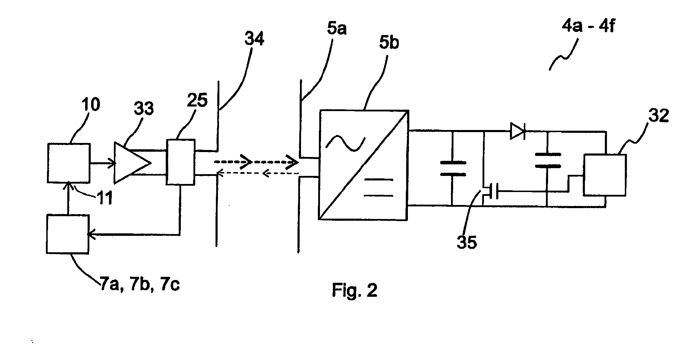

Fig. 2 presents an arrangement according to the invention between the power source 2a, 2b, 2c, the reader 7a, 7b, 7c and the measuring apparatus 4a-4f. The arrangement can also be used in connection with the embodiment of Fig. 1. As presented in Fig. 2, the power source 2a, 2b, 2c comprises an amplifier circuit 33, with which electricity is supplied to a dipole antenna 34. The power supplied to the amplifier circuit from the dipole antenna radiates into the environment as electromagnetic radiation. The magnitude of the radiant power decreases as the radiation progresses, and the area of the range of the power supply of the power source 2a, 2b, 2c is limited to that distance from the antenna that the measuring apparatuses 4a-4f that receive power wirelessly receive the operating electricity they need from the radiation of the antenna when disposed within which distance. The power source 2a, 2b, 2c comprises a control circuit 10 of the power supply, with which control circuit the amplifier circuit 33 is controlled. The control circuit 10 comprises an input 11 for the control signal of the power supply. The control circuit 10 of the power supply is fitted to start and/or to disconnect the operation of the power source 2a, 2b, 2c, on the basis of the control signal of the power supply generated by the reader 7a, 7b, 7c. In this case it is not necessary to supply power other than when reading the measuring apparatuses 4a-4f with the reader 7a, 7b, 7c, which reduces the energy consumption of the power source 2a, 2b, 2c.

The measuring apparatus 4a-4f also comprises a dipole antenna 5a, a part of the electromagnetic radiation arriving at which is rectified in a rectifier 5b formed of Schottky diodes into the operating electricity of the measuring apparatus. A part of the radiation is reflected back to its incoming direction. The control circuit 32 of the measuring apparatus comprises a measuring channel for the signal to be measured; the signal can be formed on the basis of the effect brought about in the measuring channel of the control circuit 32 by e.g. some physical measurement magnitude, such as temperature, strength of a magnetic field, or voltage between the poles of a safety switch. The control circuit also comprises a load element 35, which comprises a transistor. By connecting the transistor, the control circuit regulates the magnitude of the power reflected from the antenna, and thus the antenna 5a functions as a transmitter, by means of which the measuring signal read by the control circuit is sent to the reader 7a, 7b, 7c by modulating the magnitude of the power reflected from the antenna.

By means of a direction switch 25, the measuring signal reflected from the measuring apparatus and returned to the antenna 34 of the power source 2a, 2b, 2c is separated from the plurality of supply signals generated by the amplifier 33 of the power source. The separated measuring signal is taken to the reader 7a, 7b, 7c, where the signal is analyzed.

Instead of a dipole antenna, many other types of antenna can be used, such as antennas that radiate isotropically in all directions, or antennas that radiate in only a certain direction.

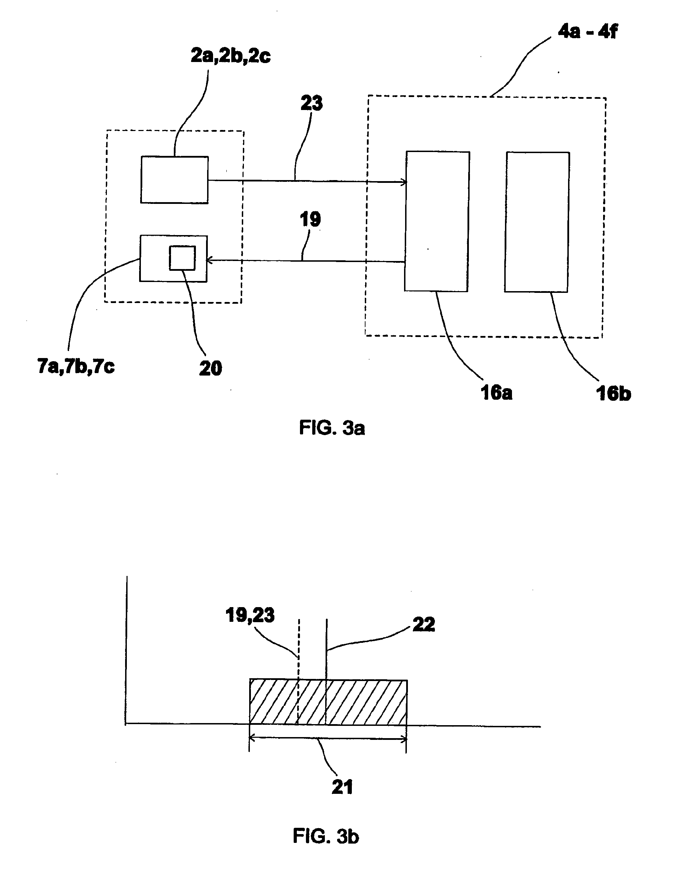

The solution presented in Figs. 3a and 3b can be used e.g. in connection with the embodiment of Fig. 1; on the other hand, the solution presented in Figs. 3a and 3b can also form an independent invention. Fig. 3a presents an arrangement according to the invention, in which the measuring apparatus 4a-4f comprises an oscillator 16, which comprises two moving parts 16a, 16b that move in relation to each other. The oscillation frequency of the oscillator is made to be variable as a response to the change in the mutual position between the aforementioned parts 16a, 16b of the oscillator that move in relation to each other. This type of oscillator can be e.g. an antenna forming two parts that move in relation to each other, in which case the resonance frequency of the antenna changes as the geometry of the antenna changes. In an elevator system the oscillator can be fitted e.g. in connection with a landing door such that the first part 16a is disposed in connection with the landing door and the second part 16b is disposed in connection with the architrave; the parts 16a, 16b of the antenna that move in relation to each other can also be fitted e.g. in connection with some safety switch of the elevator system such that the first part 16a of the antenna is disposed in connection with a moving part of the safety switch and the second part 16b of the antenna is disposed in connection with a stationary part of the antenna.

The reader 7a, 7b, 7c and the power source 2a, 2b, 2c are here integrated into the same power supply unit. The power source comprises an antenna, via which power is supplied wirelessly. The measuring apparatus 4a-4f is disposed in the area of the range of the power supply of the power source 2a, 2b, 2c. When the frequency of the radiation supplied by the power source is the same as the oscillation frequency of the oscillator 16, the power of the radiation reflected back from the measuring apparatus to the power supply unit increases. The reader 7a, 7b, 7c selects the supply frequency 23 of the power source to be used at any given time by transmitting a control signal to the control circuit of the power supply. The radiation reflected back from the measuring apparatus is taken to a reader to a frequency analyzer 20, and the amplitude of the power of the frequency component 19 of the reflected radiation corresponding to the supply frequency 23 is measured. The reflected radiation is taken for this purpose to a band-pass filter in the frequency analyzer, the frequency of which band-pass has been selected to correspond to the supply frequency of the power source. The reader changes the supply frequency 23 of the power source a little at a time and measures the amplitude of the power of the frequency component 19 of the reflected radiation corresponding to the supply frequency with a corresponding method. In this case the supply frequencies 23 are selected from the range of the frequency band 21, which frequency band 21 is limited to the environment of the target value 22 of the oscillation frequency that is a response to the mutual position between the parts 16a, 16b of the antenna that describe normal operation of the elevator. If a least one amplitude of the power of the frequency component of the reflected radiation in this case exceeds the required minimum, the oscillator is determined to be operating in an area corresponding to normal operation of the elevator. If, on the other hand, the determined frequency components reflected, and/or the combined effect of them, remain below the required minimum in their magnitude, it is deduced that the components 16a, 16b of the antenna have moved to a position in relation to each other that corresponds to an operationally special situation of the elevator; the special situation determined depends on which measuring apparatus 4a-4f is in this case in question.

It is obvious to the person skilled in the art that different embodiments of the invention are not limited to the example described above, but that they may be varied within the scope of the claims presented below.

## Claims

1. Elevator system (1), which comprises at least one power source (2a, 2b, 2c) that supplies power wirelessly; wherein at least one measuring apparatus (4a - 4f) that receives power wirelessly is fitted in the area (3a, 3b, 3c) of the range of the power supply of said power source; and wherein the aforementioned measuring apparatus comprises a transmitter (5a) for forming a measuring signal that propagates wirelessly, which elevator system further comprises at least one reader (7a, 7b, 7c); a first wireless data transfer connection (6) exists between the reader and the measuring apparatus (4a-4f), wherein said system (1) being **characterised in that** the reader (7a, 7b, 7c) is fitted to generate a control signal of the power supply; the power source (2a, 2b, 2c) comprises a control circuit (10) of the power supply; which control circuit comprises an input (11) for the control signal of the power supply; and the control circuit (10) of the power supply is fitted to start and/or to disconnect the operation of the power source (2a, 2b, 2c), on the basis of the control signal of the power supply generated by the reader (7a, 7b, 7c).

2. Elevator system according to claim 1, **characterized in that** the elevator system comprises a supervision unit (8); and **in that** a second wireless data transfer connection is made between the supervision unit (8) and the reader (7a, 7b, 7c).

3. Elevator system according to claim 1 or 2, **characterized in that** the reader (7a, 7b, 7c) and the power source (2a, 2b, 2c) are integrated into the same power supply unit.

4. Elevator system according to any of the preceding claims, **characterized in that** the power source (2a, 2b, 2c) comprises an accumulator (12).

5. Elevator system according to claim 4, **characterized in that** a charging circuit (13) is fitted in connection with the accumulator (12), which charging circuit comprises an interface to an inductively connected charging apparatus (14).

6. Elevator system according to claim 5, **characterized in that** the aforementioned charging apparatus (14) is fitted in connection with the elevator car (15).

7. Elevator system according to any of the preceding claims, **characterized in that** the power source (2a, 2c) is disposed in the end zone of the elevator hoistway; and **in that** the range (3a, 3c) of the power supply of the power source determines the safety space of the end zone of the elevator hoistway.

8. Elevator system according to any of the preceding claims, **characterized in that** the power source (2b) is fitted in connection with the elevator car (15); and **in that** the range (3b) of the power supply of the power source determines the area of permitted movement of the elevator car.

9. Elevator system according to claim 8, **characterized in that** the area (3b) of the range of the power supply of the power source (2b) fitted in connection with the elevator car (15) as well as the area (3a, 3c) of the range of the power supply of the power source (2a, 2c) disposed elsewhere in the elevator hoistway determine when they both merge the area of permitted movement of the elevator car.

10. Elevator system according to any of the preceding claims, **characterized in that** the measuring apparatus (4a^4f) comprises an oscillator (16), the oscillation frequency (17) of which is made to be a response to the magnitude being measured (18); the wirelessly propagating measuring signal formed by which measuring apparatus contains a component, the frequency (19) of which is the same as the oscillation frequency, or is proportional to the oscillation frequency; and **in that** the reader (7a, 7b, 7c) comprises a frequency analyzer (20), which comprises an input for the aforementioned measuring signal; and **in that** the frequency analyzer (20) is fitted to determine the magnitude of the components of the measuring signal fitting inside a frequency band (21) of this type, which frequency band (21) is limited to the environment of the target value (22) of the frequency that is a response to the magnitude being measured that describes normal operation of the elevator.

11. Elevator system according to claim 10, **characterized in that** the control circuit (10) of the power supply is fitted to select the frequency (23) of the power supply signal used at any given time on the basis of the control signal of the power supply, and **in that** the frequency (23) of the power supply signal used is selected to be essentially the same as, or spaced at equal intervals with, the frequency (19) of the component of its measuring signal, which in this case is determined with the frequency analyzer (20).

12. Elevator system according claim 2 and claim 10 or 11, **characterized in that** the supervision unit (8) is preferably fitted to determine an operationally special situation of the elevator if the determined components of the measuring signal, and/or the combined effect of them, remain below the required minimum (24) in their magnitude.

13. Elevator system according to any of claims 10 - 12, **characterized in that** the aforementioned oscillator (16) comprises two parts (16a, 16b) that move in relation to each other, and **in that** the oscillation frequency (17) of the oscillator (16) is made to be variable as a response to the change in the mutual position between the aforementioned parts (16a, 16b) of the oscillator that move in relation to each other.

## Patentansprüche

1. Aufzugssystem (1), welches wenigstens eine Energiequelle (2a, 2b, 2c) enthält, die Energie drahtlos bereitstellt; wobei wenigstens eine Messvorrichtung (4a - 4f), die Energie drahtlos empfängt, in dem Bereich (3a, 3b, 3c) der Reichweite der Energieversorgung der Energiequelle vorgesehen ist; und worin die vorgenannte Messvorrichtung einen Transmitter (5a) enthält um ein Messsignal zu bilden, das sich drahtlos ausbreitet, welches Aufzugssystem weiterhin wenigstens einen Leser (7a, 7b, 7c) enthält; wobei eine erste drahtlose Datenübertragungsverbindung (6) zwischen dem Leser und der Messvorrichtung (4a - 4f) besteht, worin das System (1) dadurch charakterisiert ist, dass der Leser (7a, 7b, 7c) dazu konzipiert ist, ein Steuersignal der Energieversorgung zu generieren; die Energiequelle (2a, 2b, 2c) eine Steuerschaltung (10) der Energieversorgung enthält; welche Steuerschaltung einen Eingang (11) für das Steuersignal der Energieversorgung enthält; und die Steuerschaltung (10) der Energieversorgung dazu konzipiert ist, die Tätigkeit der Energiequelle (2a, 2b, 2c) zu starten und/oder zu trennen auf der Basis des durch den Leser (7a, 7b, 7c) generierten Steuersignals der Energieversorgung.

2. Aufzugssystem nach Anspruch 1, **dadurch gekennzeichnet, dass** das Aufzugssystem eine Überwachungseinheit (8) enthält; und dass eine zweite drahtlose Datenübertragungsverbindung hergestellt wird zwischen der Überwachungseinheit (8) und dem Leser (7a, 7b, 7c).

3. Aufzugssystem nach Anspruch 1 oder 2, **dadurch gekennzeichnet, dass** der Leser (7a, 7b, 7c) und die Energiequelle (2a, 2b, 2c) in derselben Energieversorgungseinheit integriert sind.

4. Aufzugssystem nach einem der vorhergehenden Ansprüche, **dadurch gekennzeichnet, dass** die Energiequelle (2a, 2b, 2c) einen Akkumulator (12) enthält.

5. Aufzugssystem nach Anspruch 4, **dadurch gekennzeichnet, dass** eine Ladeschaltung (13) in Verbindung mit dem Akkumulator (12) vorgesehen ist, welche Ladeschaltung eine Schnittstelle mit einer induktiv verbundenen Ladevorrichtung (14) enthält.

6. Aufzugssystem nach Anspruch 5, **dadurch gekennzeichnet, dass** die vorgenannte Ladevorrichtung (14) in Verbindung mit der Aufzugskabine (15) angeordnet ist.

7. Aufzugssystem nach einem der vorhergehenden Ansprüche, **dadurch gekennzeichnet, dass** die Energiequelle (2a, 2c) in der Endzone des Aufzugshebeweges angeordnet ist; und dass die Reichweite (3a, 3c) der Energieversorgung der Energiequelle den Sicherheitsraum der Endzone des Aufzugshebeweges bestimmt.

8. Aufzugssystem nach einem der vorhergehenden Ansprüche, **dadurch gekennzeichnet, dass** die Energiequelle (2b) in Verbindung mit der Aufzugskabine (15) angeordnet ist; und dass die Reichweite (3b) der Energiezufuhr der Energiequelle den Bereich erlaubter Bewegung der Aufzugskabine bestimmt.

9. Aufzugssystem nach Anspruch 8, **dadurch gekennzeichnet, dass** der Bereich (3b) der Reichweite der Energieversorgung der Energiequelle (2b) in Verbindung mit der Aufzugskabine (15) angeordnet ist, als auch der Bereich (3a, 3c) der Reichweite der Energieversorgung der Energiequelle (2a, 2c), die irgendwo anders in dem Aufzugshebeweg angeordnet ist, bestimmen, wenn sich beide im Bereich der erlaubten Bewegung der Aufzugskabine überlappen.

10. Aufzugssystem nach einem der vorhergehenden Ansprüche, **dadurch gekennzeichnet, dass** die Messvorrichtung (4a - 4f) einen Oszillator (16) enthält, dessen Schwingungsfrequenz (17) derart gewählt wird, dass sie eine Antwort auf die zu messende (18) Größe ist; wobei das sich drahtlos ausbreitende Messsignal, dass durch die Messvorrichtung gebildet wird, eine Komponente enthält, deren Frequenz (19) die gleiche ist, wie die Schwingungsfrequenz oder die proportional zur Schwingungsfrequenz ist; und dass der Leser (7a, 7b, 7c) einen Frequenzanalysator (20) aufweist, der einen Eingang für das vorgenannte Messsignal enthält; und dass der Frequenzanalysator (20) dazu konzipiert ist, die Größe der Komponenten des Messsignals innerhalb eines Frequenzbandes (21) dieses Typs zu bestimmen, welches Frequenzband (21) durch die Umgebung des Zielwertes (22) der Frequenz limitiert ist, die eine Antwort auf die gemessene Größe darstellt, die eine normale Tätigkeit des Aufzugs beschreibt.

11. Aufzugssystem nach Anspruch 10, **dadurch gekennzeichnet, dass** die Steuerschaltung (10) der Energieversorgung dazu konzipiert ist, die Frequenz (23) des verwendeten Energieversorgungssignals jederzeit auf der Basis des Steuersignals der Energieversorgung zu selektieren, und dass die Frequenz (23) des verwendeten Energieversorgungssignals so gewählt wird, dass sie im Wesentlichen die gleiche ist oder in gleichen Intervallen beabstandet ist zur Frequenz (19) der Komponente ihres Messsignals, welches in diesem Fall mit dem Frequenzanalysator (20) bestimmt wird.

12. Aufzugssystem nach Anspruch 2 und Anspruch 10 oder 11, **dadurch gekennzeichnet, dass** die Überwachungseinheit (8) vorzugsweise dazu konzipiert ist, eine spezielle Betriebssituation des Aufzugs festzustellen, wenn die bestimmten Komponenten des Messsignals und/oder deren kombinierter Effekt unterhalb des verlangten Minimums (24) ihrer Größe bleiben.

13. Aufzugssystem nach einem der Ansprüche 10 - 12, **dadurch gekennzeichnet, dass** der vorgenannte Oszillator (16) zwei Teile (16a, 16b) enthält, die sich relativ zueinander bewegen, und dass die Schwingungsfrequenz (17) des Oszillators (16) variabel gemacht wird in Erwiderung auf die Änderung der wechselseitigen Position zwischen den vorgenannten sich relativ zueinander bewegenden Teilen (16a, 16b) des Oszillators.

## Revendications

1. Système d'ascenseur (1), qui comprend au moins une source d'alimentation (2a, 2b, 2c) qui fournit de l'énergie sans fil ; dans lequel au moins un appareil de mesure (4a à 4f) qui reçoit une alimentation sans fil est fixé dans la zone (3a, 3b, 3c) de la plage de l'alimentation électrique de ladite source d'alimentation ; et dans lequel l'appareil de mesure susmentionné comprend un émetteur (5) destiné à former un signal de mesure à propagation sans fil, lequel système d'ascenseur comprend en outre au moins un lecteur (7a, 7b, 7c) ; une première connexion de transfert de données sans fil (6) existe entre le lecteur et l'appareil de mesure (4a à 4f), dans lequel ledit système (1) étant **caractérisé par le fait que** le lecteur (7a, 7b, 7c) est conçu pour générer un signal de commande de l'alimentation électrique ; la source d'alimentation (2a, 2b, 2c) comprend un circuit de commande (10) de l'alimentation électrique ; lequel circuit de commande comprend une entrée (11) pour le signal de commande de l'alimentation électrique ; et le circuit de commande (10) de l'alimentation électrique est conçu pour démarrer et/ou pour déconnecter le fonctionnement de la source d'alimentation (2a, 2b, 2c), sur la base du signal de commande de l'alimentation électrique généré par le lecteur (7a, 7b, 7c).

2. Système d'ascenseur selon la revendication 1, **caractérisé par le fait que** le système d'ascenseur comprend une unité de supervision (8) ; et **par le fait que** une seconde connexion de transfert de données sans fil est réalisée entre l'unité de supervision (8) et le lecteur (7a, 7b, 7c).

3. Système d'ascenseur selon la revendication 1 ou 2, **caractérisé par le fait que** le lecteur (7a, 7b, 7c) et la source d'alimentation (2a, 2b, 2c) sont intégrés dans la même unité d'alimentation électrique.

4. Système d'ascenseur selon l'une quelconque des revendications précédentes, **caractérisé par le fait que** la source d'alimentation (2a, 2b, 2c) comprend un accumulateur (12).

5. Système d'ascenseur selon la revendication 4, **caractérisé par le fait que** un circuit de chargement (13) monté de façon à être connecté à l'accumulateur (12), lequel circuit de chargement comprend une interface vers un appareil de chargement relié par induction (14).

6. Système d'ascenseur selon la revendication 5, **caractérisé par le fait que** l'appareil de chargement (14) susmentionné est monté de façon à être connecté à la cabine d'ascenseur (15).

7. Système d'ascenseur selon l'une quelconque des revendications précédentes, **caractérisé par le fait que** la source d'alimentation (2a, 2c) est disposée dans la zone terminale de la cage d'ascenseur ; et **par le fait que** la plage (3a, 3c) de l'alimentation électrique de la source d'alimentation détermine l'espace de sécurité de la zone terminale de la cage d'ascenseur.

8. Système d'ascenseur selon l'une quelconque des revendications précédentes, **caractérisé par le fait que** la source d'alimentation (2b) est montée de façon à être connectée à la cabine d'ascenseur (15) ; et **par le fait que** la plage (3b) de l'alimentation électrique de la source d'alimentation détermine la région du mouvement autorisé de la cabine d'ascenseur.

9. Système d'ascenseur selon la revendication 8, **caractérisé par le fait que** la région (3b) de la plage de l'alimentation électrique de la source d'alimentation (2b) montée de façon à être connecté à la cabine d'ascenseur (15) ainsi que la région (3a, 3c) de la plage de l'alimentation électrique de la source d'alimentation (2a, 2c) disposée autre part dans la cage d'ascenseur déterminent quand les deux rejoignent la région du mouvement autorisé de la cabine d'ascenseur.

10. Système d'ascenseur selon l'une quelconque des revendications précédentes, **caractérisé par le fait que** l'appareil de mesure (4a à 4f) comprend un oscillateur (16), dont la fréquence d'oscillation (17) est amenée à être une réponse à la magnitude étant mesurée (18) ; le signal de mesure à propagation sans fil formé par cet appareil de mesure contient un composant, dont la fréquence (19) est la même que la fréquence d'oscillation, ou est proportionnelle à la fréquence d'oscillation ; et **par le fait que** le lecteur (7a, 7b, 7c) comprend un analyseur de fréquence (20), qui comprend une entrée pour le signal de mesure susmentionné ; et **par le fait que** l'analyseur de fréquence (20) est monté de façon à déterminer la magnitude des composants du signal de mesure s'adaptant à l'intérieur d'une bande fréquence (21) de ce type, laquelle bande de fréquence (21) est limitée à l'environnement de la valeur cible (22) de la fréquence qui est une réponse à la magnitude étant mesurée qui décrit le fonctionnement normal de l'ascenseur.

11. Système d'ascenseur selon la revendication 10, **caractérisé par le fait que** le circuit de commande (10) de l'alimentation électrique est monté de façon à choisir la fréquence (23) du signal d'alimentation électrique utilisé à n'importe quel moment sur la base du signal de commande de l'alimentation électrique, et **par le fait que** la fréquence (23) du signal de l'alimentation électrique utilisé est choisie pour être essentiellement identique à, ou espacée à intervalles égaux avec, la fréquence (19) du composant de son signal de mesure, qui dans ce cas est déterminée avec l'analyseur de fréquence (20).

12. Système d'ascenseur selon la revendication 2 et la revendication 10 ou 11, **caractérisé par le fait que** l'unité de supervision (8) est préférentiellement apte à déterminer une situation fonctionnellement spéciale de l'ascenseur si les composants déterminés du signal de mesure, et/ou leur effet combiné, restent inférieurs au minimum de la magnitude exigée (24).

13. Système d'ascenseur selon l'une des revendications 10 à 12, **caractérisé par le fait que** l'oscillateur (16) mentionné précédemment comprend deux parties (16a, 16b) qui se déplacent l'une par rapport à l'autre, et **par le fait que** la fréquence d'oscillation (17) de l'oscillateur (16) est amenée pour être variable en tant que réponse au changement de position mutuelle entre les parties (16a, 16b) susmentionnées de l'oscillateur qui se déplacent l'une par rapport à l'autre.
